Europäisches Patentamt

European Patent Office

Office européen des brevets

(19)

(11) EP 0 969 672 A1

(12) **DEMANDE DE BREVET EUROPEEN**

(43) Date de publication:
**05.01.2000 Bulletin 2000/01**

(51) Int Cl.⁷: **H04N 7/50**

(21) Numéro de dépôt: **99401459.5**

(22) Date de dépôt: **14.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **23.06.1998 FR 9807934**

(71) Demandeur: **STMicroelectronics SA**
**94250 Gentilly Cedex (FR)**

(72) Inventeurs:
• **Bramley, Richard**
**38100 Grenoble (FR)**
• **Woodmard, Patrice**
**Fishponds, Bristol BS16 5DG (GB)**

(74) Mandataire: **Casalonga, Axel**
**BUREAU D.A. CASALONGA - JOSSE**
**Morassistrasse 8**
**80469 München (DE)**

(54) **Procédé et dispositif de décodage d'une image, comprimée notamment selon les normes MPEG, en particulier une image bidirectionnelle**

(57) Pour effectuer deux décodages successifs d'une image bidirectionnelle, on repère l'adresse (@1) du paquet de données contenant l'identifiant de début d'image (PSC) de l'image bidirectionnelle, et on mémorise la référence temporelle (TR2) de cette image. Après le premier décodage, on pointe à nouveau la mémoire à l'adresse (@1) mémorisée et on effectue le deuxième décodage après une nouvelle détection de la référence temporelle de l'image.

FIG.5

EP 0 969 672 A1

Printed by Jouve, 75001 PARIS (FR)

**Description**

L'invention concerne le décodage d'images comprimées notamment selon une norme MPEG, leur affichage, et plus particulièrement le décodage des images bidirectionnelles.

Selon diverses normes de compression d'images, notamment MPEG ("Motion Pictures Experts Group"), les images sont décodées par carrés, ou macroblocs, généralement de 16 x 16 pixels. Les macroblocs peuvent être de divers formats. Le format le plus couramment utilisé est celui dit 4 : 2 : 0 selon lequel chaque macrobloc contient quatre blocs de 8 x 8 pixels de luminance de huit bits et deux blocs de 8 x 8 pixels de chrominance de huit bits.

Les images traitées sont essentiellement de trois types, à savoir un type dit "intra", un type dit "prédit" et un type dit "bidirectionnel". L'homme du métier sait que les macroblocs d'une image "intra" ne subissent pas de compensation de mouvement. Dans une image prédite, chaque macrobloc peut subir une compensation de mouvement qui consiste à combiner le macrobloc avec un autre macrobloc, dit "prédicteur", cherché dans une image précédemment décodée. Chaque macrobloc d'une image bidirectionnelle peut subir une compensation de mouvement qui consiste à combiner le macrobloc avec deux autres macroblocs prédicteurs, cherchés respectivement dans deux images précédemment décodées. Les positions des macroblocs prédicteurs sont déterminées par des vecteurs de mouvement.

Un système de décodage/affichage MPEG, plus simplement appelé dans la suite "décodeur MPEG", doit dialoguer avec une mémoire dynamique pour procéder au décodage et à l'affichage des images décodées. Une telle mémoire joue un rôle essentiel dans le décodage et l'affichage de ces images.

Dans certains modes de fonctionnement (arrêt sur image par exemple) certaines images doivent être dédodées plusieurs fois.

Ces décodages multiples nécessitent des accès répétés à la zone de la mémoire d'images stockant les données comprimées d'images en attente de traitement. Il est notamment particulièrement important de pouvoir redécoder, sans risques d'erreurs émanant notamment de l'adressage de la mémoire, les bonnes données comprimées correspondant effectivement à une image déjà préalablement décodée.

L'invention vise à apporter une solution à ce problème, simple à mettre en oeuvre et à réaliser.

L'invention s'applique tout particulièrement, mais non exclusivement, au décodage "au vol" ("on the fly") des images bidirectionnelles, décodage qui s'opère en fait deux fois de suite pendant que les deux trames de l'image sont directement affichées, et qui ne nécessite pas de stockage de l'image bidirectionnelle décodée dans la mémoire d'image, réduisant ainsi sa taille.

L'invention propose donc un procédé de décodage d'une image incidente, par exemple une image bidirectionnelle, dans lequel on stocke dans une zone mémoire d'une mémoire dynamique, un flot de données comprimées comportant des groupes successifs de données comprimées respectivement relatifs à des images incidentes successives dont certaines nécessitent deux décodages successifs. Chaque groupe de données associé à une image comporte un identifiant de début d'image (code de début d'image; "picture start code" en langue anglaise) suivi d'un en-tête contenant un identifiant spécifique de ladite image (par exemple la référence temporelle de cette image; "temporal reference" en langue anglaise), cet en-tête étant suivi des données utiles. On lit de flot de données par paquets de bits localisés à des adresses consécutives de ladite zone mémoire. Pour chaque paquet extrait de ladite zone mémoire, on détecte la présence ou l'absence d'un identifiant de début d'image, et dans le cas où un identifiant de début d'image détecté correspond à une image nécessitant deux décodages successifs, on mémorise l'adresse du paquet considéré ainsi que l'identifiant spécifique de l'image, puis on effectue un premier décodage des données utiles de l'image à l'issue duquel on extrait à nouveau de la zone mémoire le paquet situé à l'adresse mémorisée. On procède alors au deuxième décodage de ladite image, en décodant les données du paquet, après détection de l'identifiant spécifique, les données du paquet précédant ledit identifiant spécifique n'étant pas prises en compte pour le décodage.

Dans un flot de données MPEG, une difficulté pour réaliser deux décodages successifs d'une même image, résident dans le fait que les intervalles entre les différents identifiants de début d'image des différentes images ne sont pas constants et dépendent du contenu des images. Par ailleurs, la mémoire d'image est en pratique lue par paquets de bits situés à des adresses successives de la mémoire.

Une première caractéristique de l'invention consiste donc à mémoriser l'adresse du paquet de bits dans lequel a été détecté l'identifiant de début d'une image nécessitant deux décodages successifs, par exemple une image bidirectionnelle.

Ceci étant, si, une fois le premier décodage effectué, on revient en arrière dans la zone mémoire de façon à repointer sur le paquet de bits contenant l'identifiant de début d'image, on ne connaît pas précisément la position de cet identifiant de début d'image dans le paquet, et on n'est en outre pas certain que le paquet ne comporte pas d'autres identifiants de début d'image correspondant à des images précédentes. En d'autres termes, si l'on effectuait alors sans précaution un deuxième décodage des données issues du paquet situé à l'adresse à laquelle on n'est revenu se positionner, on obtiendrait un deuxième décodage erroné de l'image.

L'invention résout ces difficultés supplémentaires, en prévoyant, en combinaison avec la première caractéristique qui vient d'être évoquée, une deuxième caractéristique consistant à mémoriser un identifiant spécifique (par exemple la référence temporelle de l'image) permettant de repérer de façon bi-univoque l'image dans la séquence. Ainsi, après être revenu en arrière et avoir extrait à nouveau le paquet contenant l'identifiant de début d'image de l'image à redécoder, on analyse séquentiellement les bits du paquet jusqu'à détecter à nouveau la présence de l'identifiant spécifique de l'image bidirectionnelle à redécoder. Et c'est seulement à partir de cet instant que le circuit pipeline utilisé classiquement dans un décodeur MPEG va pouvoir prendre en compte les données utiles de cette image de façon à en effectuer le deuxième décodage.

L'invention a également pour objet un dispositif de décodage d'une image incidente comprenant

- une mémoire dynamique comportant une zone mémoire stockant un flot de données comprimées comportant des groupes successifs de données comprimées respectivement relatifs à des images incidentes successives dont certaines nécessitent deux décodages successifs, chaque groupe de données associé à une image comportant un identifiant de début d'image, suivi d'un en-tête contenant un identifiant spécifique de ladite image, suivi de données utiles,
- un premier pointeur d'adresse et un deuxième pointeur d'adresse permettant chacun de lire la zone mémoire par paquets de bits,
- un détecteur d'identifiant de début d'image apte à détecter dans chaque paquet de bits extrait à l'adresse pointée par le premier pointeur d'adresse, la présence ou l'absence d'un identifiant de début d'image,
- des premiers moyens de stockage (par exemple un registre) aptes à stocker en présence d'un premier signal de commande représentatif de la présence d'une image courante nécessitant deux décodages successifs, l'adresse spécifique du paquet contenant l'identifiant de début d'image de ladite image courante,
- des deuxièmes moyens de stockage (par exemple un deuxième registre) aptes à stocker, en présence du premier signal de commande, l'identifiant spécifique de ladite image courante,
- des moyens de traitement (par exemple un microprocesseur) reliés au détecteur d'identifiant de début d'image, aptes à délivrer le premier signal de commande,
- un circuit de décodage (circuit pipeline), apte à décoder les bits de chaque paquet pointé par le deuxième pointeur d'adresse,
- des moyens de gestion de pointeur, aptes, en réponse à un deuxième signal de commande émis par le circuit de décodage et représentatif de la fin d'un premier décodage d'une image, à déplacer le deuxième pointeur d'adresse à l'adresse spécifique stockée dans les premiers moyens de stockage, et
- des moyens d'inhibition de décodage aptes à comparer le contenu des deuxièmes moyens de stockage avec les informations contenues dans le paquet situé à ladite adresse spécifique et à inhiber le circuit de décodage tant que l'identifiant spécifique de ladite image (référence temporelle) n'est pas de nouveau détecté.

D'autres avantages et caractéristiques de l'invention apparaîtront à l'examen de la description détaillée de modes de mise en oeuvre et de réalisation nullement limitatifs, et des dessins annexés sur lesquels :

- la figure 1 est un synoptique très schématique d'un système de traitement d'images haute définition incorporant un dispositif de décodage d'images selon l'invention,
- la figure 2 est un synoptique schématique plus détaillé d'un dispositif de décodage selon l'invention,
- la figure 3 illustre le décodage au vol et l'affichage d'une image bidirectionnelle,
- les figures 4 et 5 illustrent plus en détail un mode de réalisation et de mise en oeuvre selon l'invention appliqué plus particulièrement au double décodage d'une image bidirectionnelle,
- la figure 6 est un synoptique schématique plus détaillé d'un convertisseur bloc/ligne selon l'invention appartenant au dispositif de la figure 2, et
- la figure 7 illustre l'organisation par pages d'une mémoire dynamique.

Le mode de réalisation et de mise en oeuvre qui va maintenant être décrit en détail concerne plus particulièrement le décodage au vol des images bidirectionnelles et l'affichage de ces images, ainsi que l'affichage des images "intra" et "prédites" décodées et stockées dans la mémoire d'images par l'intermédiaire d'une conversion bloc/ligne. Ceci étant, comme indiqué ci-avant, l'invention n'est pas limitée à ce mode de réalisation et concerne d'une façon générale tous les cas où une image nécessite au moins deux décodages successifs que ce soient des images bidirectionnelles, ou des images "intra" ou "prédites", par exemple dans un mode de fonctionnement d'arrêt sur image, ou d'avance ou de retour rapide... ("trick mode" en langue anglaise).

Par ailleurs, l'organisation en pages de la mémoire dynamique qui est décrite ci-après en combinaison avec une conversion bloc/ligne, de façon à minimiser le nombre d'ouvertures de page lors de l'affichage des images stockées, n'est qu'un exemple de réalisation qui n'est pas limitatif au sens de la présente invention.

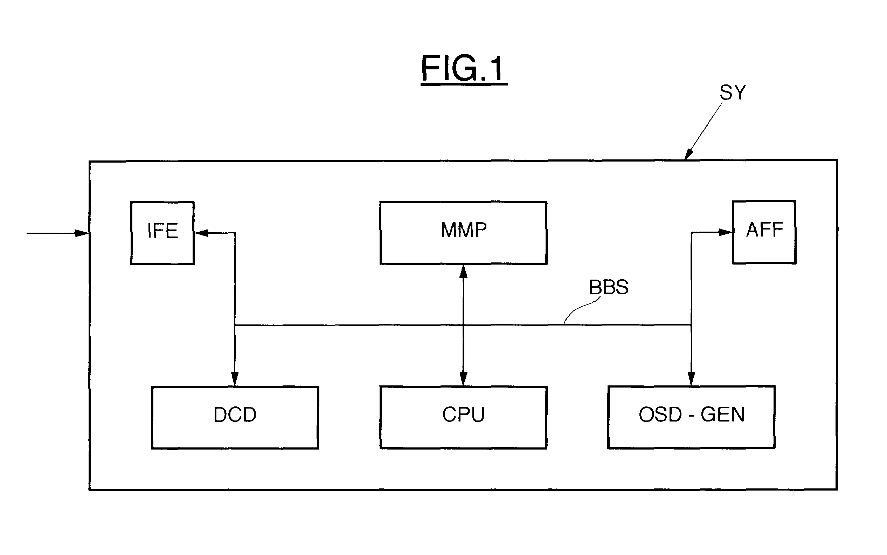

Sur la figure 1, la référence SY désigne d'une façon générale un système de traitement d'images numériques incorporant par exemple un décodeur satellite et/ou un téléviseur.

Dans ce système SY, des moyens d'entrée IFE reçoivent, par exemple, d'une antenne satellite ou d'un disque numérique (non représentés ici à des fins de simplification), un flot de données comprimées selon, par exemple, les normes MPEG.

Un dispositif DCD de traitement d'images selon l'invention. ou décodeur MPEG, décode les images codées à partir de ces données comprimées aux fins de leur affichage sur un écran d'affichage AFF.

Le système SY comprend par ailleurs un microprocesseur CPU pouvant par exemple gérer le décodage des différents canaux satellite, ainsi qu'un générateur OSD-GEN d'informations graphiques, destinées à être incrustées sur l'écran en superposition des images vidéo, par exemple des menus interactifs obtenus par l'actionnement d'une télécommande de téléviseur.

Enfin, un autre élément de ce système SY est une mémoire dynamique MMP qui est partagée entre ces différents éléments. Il est avantageux de limiter la bande passante-mémoire utilisée afin de permettre aux différents éléments du système SY d'y accéder le plus souvent possible.

L'ensemble des éléments de la figure 1 dialoguent via un bus bidirectionnel BBS.

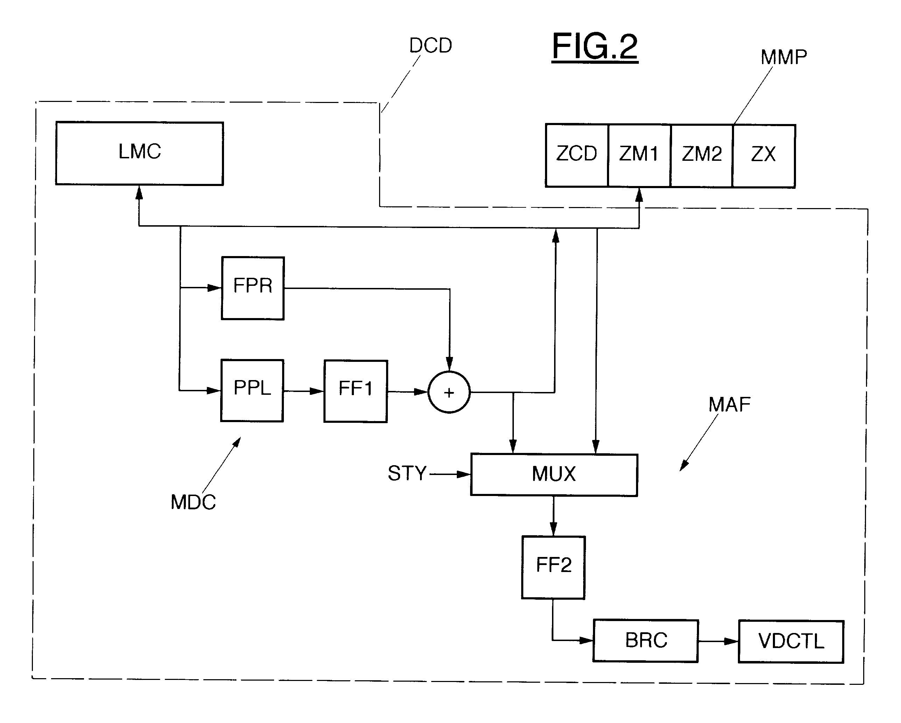

Sur la figure 2, le décodeur DCD comporte essentiellement des moyens dits "de décodage", référencés MDC, et des moyens dits de "gestion d'affichage" et référencés MAF.

Les moyens de décodage MDC comportent essentiellement un circuit pipeline PPL qui reçoit les données comprimées par un bus de 64 bits et fournit les blocs de luminance et de chrominance des macroblocs traités, à un additionneur par l'intermédiaire d'une mémoire du type "premier entré - premier sorti" (FIFO) référencée FF1. Par ailleurs, l'additionneur reçoit des blocs correspondants de macroblocs prédicteurs filtrés délivrés par un circuit de prédiction FPR à partir de macroblocs prédicteurs extraits de la mémoire MMP.

Le circuit dit "pipeline" PPL effectue de façon classique généralement un décodage à longueur variable (VLD), un décodage de chaîne de zéros (RLD), une conversion de balayage zigzag en balayage linéaire et une transformée cosinus discrète inverse ($\text{DCT}^{-1}$). Selon les normes MPEG, le circuit de prédiction FPR comprend essentiellement un filtre dit "demi-pixel" destiné, si un vecteur de mouvement permettant de chercher un macrobloc prédicteur n'est pas entier, de décaler ce macrobloc prédicteur d'un demi-pixel verticalement et/ou horizontalement. Les moyens de décodage MDC dialoguent par l'intermédiaire du bus avec la mémoire principale MMP et les échanges entre cette mémoire et les différents éléments du décodeur DCD sont gérés par des moyens de contrôle principaux LMC.

Les moyens de gestion d'affichage MAF comprennent ici un multiplexeur MUX dont une première entrée est reliée à la sortie de l'additionneur des moyens de décodage MDC, et dont une deuxième entrée est reliée à la sortie de la mémoire MMP. La sortie du multiplexeur est reliée à une deuxième mémoire tampon du type FIFO, référencé FF2. La sortie de cette mémoire tampon FF2 est reliée à un convertisseur bloc/ligne BRC dont on reviendra plus en détail ci-après sur la structure et la fonction. La sortie du bloc BRC est reliée à un contrôleur vidéo VDCTL assurant la gestion de l'écran d'affichage AFF.

La sortie du multiplexeur MUX est reliée à l'une ou l'autre de ses deux entrées en fonction d'un signal de commande STY représentatif du type d'image affichée, c'est-à-dire en l'espèce soit une image bidirectionnelle, soit une image intra ou prédite.

Les normes MPEG préconisent que la mémoire MMP comporte une zone de données comprimées ZCD d'au moins 2,6 Mégabits dans laquelle sont écrites les données comprimées en attente de traitement, ainsi qu'une zone ZX servant à stocker des informations à afficher en surimpression sur l'image et des données de son, la capacité de cette zone ZX s'étend d'environ 1 Mégabit.

Outre ces zones, la mémoire MMP comporte, dans l'exemple décrit ici et correspondant à un décodage au vol des images bidirectionnelles, deux zones supplémentaires d'images ZM1 et ZM2. Chacune de ces zones ZM1 et ZM2 doit être capable de stocker une image PAL (la plus grande selon les normes internationales) de 720 x 576 pixels. En utilisant le format 4 : 2 : 0 des macroblocs, les pixels sont les douze bits et la taille totale de l'image est d'environ 4,9 Mégabits.

Dans le mode de réalisation décrit ici, au lieu de stocker une image bidirectionnelle en cours de reconstruction dans une zone mémoire de la mémoire MMP afin de l'afficher plus tard, cette image bidirectionnelle est affichée au vol, c'est-à-dire qu'elle est affichée pendant qu'elle est décodée. Ceci permet de réduire la taille de la mémoire MMP et de ne prévoir que deux zones mémoire ZM1 et ZM2 pour stocker deux images précédemment décodées, du type "intra" ou "prédit". Dans ce cas, la taille nécessaire de la mémoire MMP est diminuée de la taille d'une zone mémoire et elle peut alors être aisément réalisée, notamment pour le standard PAL (le plus contraignant) par quatre mémoires dynamiques asynchrones (DRAM) de 256 kmots de 16 bits ou par une mémoire dynamique synchrone (SDRAM) de 16 Mégabits

Si l'on veut afficher au vol une image bidirectionnelle en cours de décodage, il faut afficher d'abord une première trame constituée des lignes impaires de l'image, puis une deuxième trame constituée des lignes paires de l'image alors que le traitement précédant l'affichage est généralement effectué sur l'image globale, c'est-à-dire dans l'ordre des lignes. Ceci entraîne, si les moyens de décodage MDC décodent les lignes au rythme d'affichage de celles-ci, que la $(2K-1)^{\text{ème}}$ ligne doit être affiché au moment où les moyens de décodage MDC décodent la $K^{\text{ème}}$ ligne. En d'autres termes, au moment où la première trame aurait dû être affichée, le décodeur n'aura pu décoder que la moitié de cette trame.

Aussi est-il prévu de décoder chaque image bidirectionnelle deux fois pendant la durée d'affichage de cette image. Dans ce cas, au moment où l'on doit afficher la 2K-1ème ligne, on aura décodé 2K lignes. Plus précisément, au moment où on aura affiché la première trame, on aura décodé l'image complète et donc les deux trames de cette image.

Comme l'affichage s'effectue au vol, la deuxième trame qui était décodée mais non affichée est perdue. Cette deuxième trame est affichée en même temps qu'on décode une deuxième fois l'image

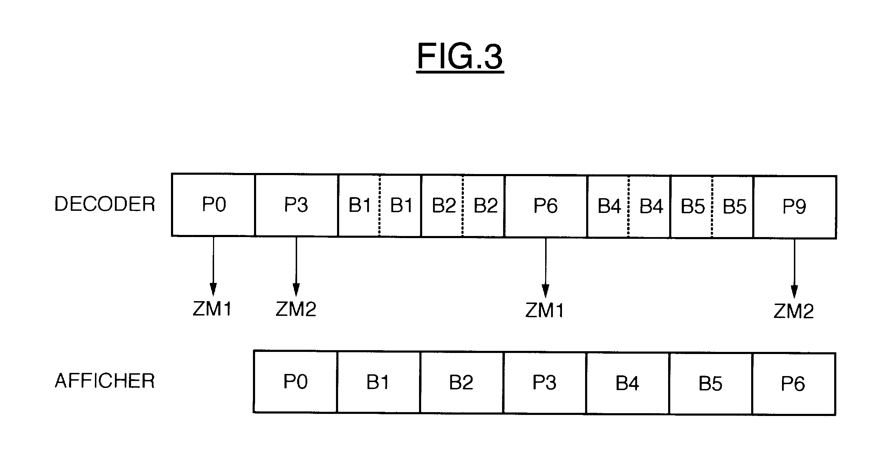

La figure 3 représente un diagramme temporel du décodage et de l'affichage d'un groupe d'images. Les images à afficher successivement sont désignées par P0, B1, B2, P3, B4, B5, P6, où la lettre P indique une image prédite et la lettre B une image bidirectionnelle. Une telle succession d'images est classique selon les normes MPEG.

La reconstruction de chaque image prédite P nécessite des macroblocs prédicteurs cherchés dans l'image prédite (ou "intra" non représentée) qui lui précède. La reconstruction de chaque image bidirectionnelle B nécessite des macroblocs prédicteurs cherchés dans les deux images prédites qui l'encadrent. Ainsi, les données comprimées correspondant aux images arrivent au décodeur DCD dans un ordre différent de celui de l'affichage. Ici, ces données comprimées arrivent selon l'ordre P0, P3, B1, B2, P6, B4, B5.

Initialement, l'image P0 est décodée et stockée en mémoire, par exemple dans la zone ZM1. Pendant que l'image P3 est décodée et stockée dans la zone ZM2, on affiche l'image P0. Ensuite, l'image P1 est décodée une première fois à vitesse double tandis que l'on affiche au vol la première trame de l'image B1, puis on décode une deuxième fois l'image B1 à vitesse double tandis qu'on affiche la deuxième trame de l'image B1. Chaque décodage de l'image B1 par les moyens MDC utilise des macroblocs prédicteurs cherchés dans les images P0 et P3, qui sont stockées dans les zones ZM1 et ZM2. Les mêmes opérations se produisent pour l'image bidirectionnelle B2. Ensuite, l'image P6 est décodée et stockée dans la zone ZM1 à la place de l'image P0 tandis qu'on affiche l'image P3. Les images B4 et B5 sont, comme les images B1 et B2, décodées deux fois à vitesse double tandis qu'on les affiche. Les décodages des images B4 et B5 utilisent des macroblocs prédicteurs pour chercher dans les images P3 et P6 qui sont stockées dans les zones ZM2 et ZM1.

Afin d'effectuer le décodage au vol des images bidirectionnelles, les moyens de contrôle LMC sont reprogrammés pour effectuer deux fois la tache de transfert au circuit pipeline PPL des données comprimées correspondant à chaque image bidirectionnelle et stockées dans la zone ZCD. A cet égard, les moyens de contrôle sont typiquement cadencés à 25,5 MHz, le circuit pipeline étant lui cadencé typiquement à 34 MHz. Des circuits fonctionnant à ces vitesses sont tout à fait réalisables dans la technologie habituelle.

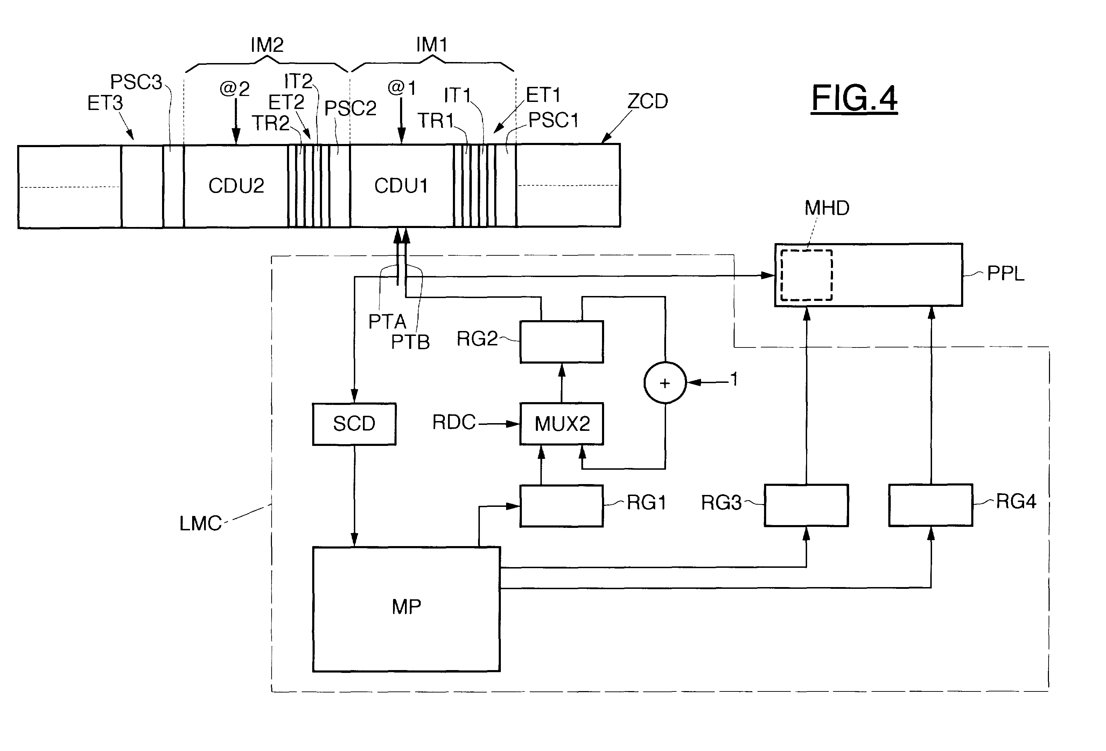

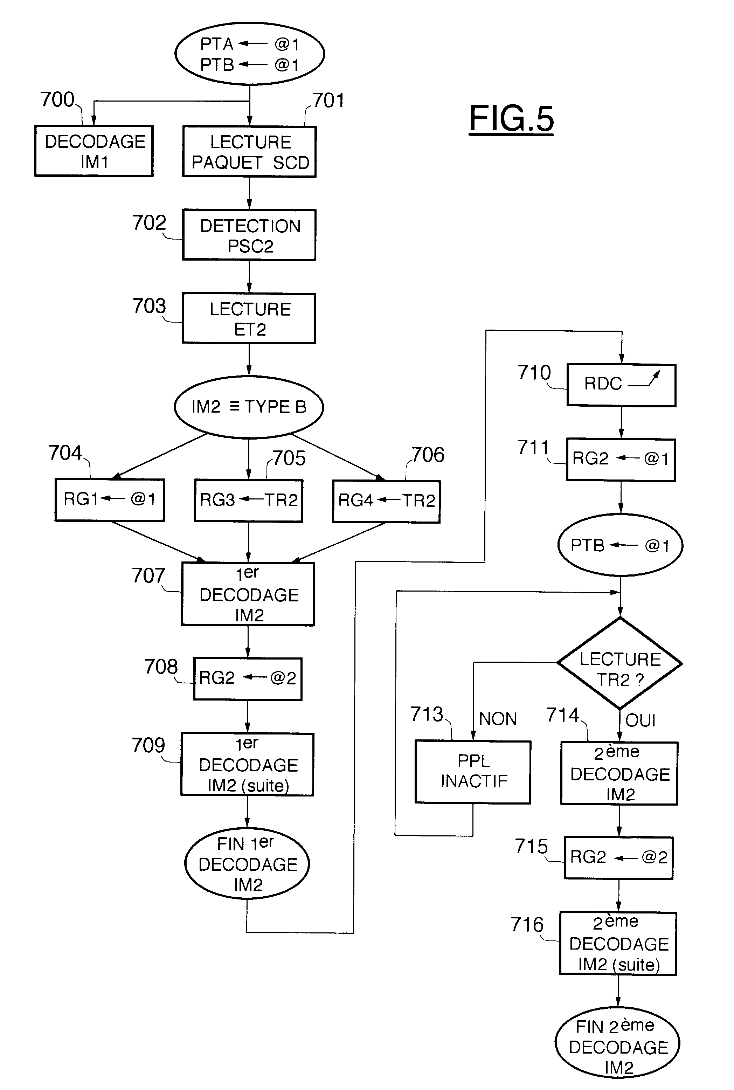

Un mode particulièrement simple de réalisation et de mise en oeuvre selon l'invention permettant aux moyens de contrôle LMC de délivrer deux fois les données comprimées au circuit pipeliné PPL est maintenant décrit en se référant plus particulièrement aux figures 4 et 5.

Classiquement, le flot des données comprimées MPEG, stockées dans la zone mémoire ZCD, comporte des groupes successifs de données comprimées respectivement relatifs à des images incidentes successives IM1, IM2...

Chaque groupe de données associé à une image comporte un identifiant de début d'image PSC (Code de Début d'Image; "Picture Start Code") suivi d'un en-tête ET. Cet en-tête comporte notamment un identifiant spécifique de ladite image, permettant d'identifier de façon bi-univoque ladite image dans la séquence d'images. Cet identifiant spécifique est par exemple ici la référence temporelle TR de l'image ("Temporal Reference" en langue anglaise). L'en-tête comporte également une information IT identifiant le type d'image, par exemple "intra", "prédit" ou "bidirectionnel".

L'en-tête est suivi des données utiles CDU de l'image.

Il est prévu un premier pointeur d'adresse PTA et un deuxième pointeur d'adresse PTB permettant chacun de lire par paquets de bits la zone mémoire aux adresses successives @1, @2...

Les moyens LMC, architecturés autour de moyens de traitement MP, composés essentiellement d'un microprocesseur, comportent un détecteur SCD d'identifiant de début d'image, réalisé par exemple de façon câblé, et apte à détecter dans chaque paquet de bits extrait à l'adresse pointée par le premier pointeur d'adresse PTA, la présence ou l'absence d'un identifiant de début d'image PSC.

Des moyens de gestion de pointeur, aptes à commander la position du deuxième pointeur PTB, sont également reliés aux moyens de traitement MP. Ces moyens de gestion de pointeur comportent schématiquement par exemple un premier registre RG1 dont la sortie est reliée à l'entrée d'un deuxième registre RG2 par l'intermédiaire d'un multiplexeur MUX2 commandé par un signal de commande RDC représentatif de la commande d'un deuxième décodage d'une image. La sortie du registre RG2 est également rebouclée sur son entrée par l'intermédiaire d'un moyen d'incrémentation d'adresse et du multiplexeur MUX2. Le registre RG2 contient donc en fait l'adresse courante du pointeur d'adresse PTB.

Un troisième registre RG3 est apte à stocker la référence temporelle TR d'une image tandis qu'un quatrième registre RG4 est apte à stocker l'information IT représentative du type d'image à décoder de façon à permettre aux différents moyens du circuit pipeline PPL de décoder de façon adéquate l'image courante.

En fait, chaque registre RG3 et RG4 est apte à stocker respectivement les informations TR et IT de l'image courante en cours de décodage dans le circuit PPL et également celles de l'image suivante.

Enfin, des moyens d'inhibition de décodage MHD, qui ont été représentés ici à des fins de simplification à l'intérieur du bloc PPL, mais qui pourraient bien entendu se situer à l'extérieur, reçoivent d'une part les bits extraits de la mémoire et contenus dans le paquet pointé par le pointeur PTB, et d'autre part, le contenu du registre RG3. On reviendra plus en détail ci-après sur la fonction de ces moyens MHD qui peuvent être réalisés de façon câblée ou par logiciel.

On va maintenant décrire en se référant plus particulièrement à la figure 5, le fonctionnement de moyens qui viennent d'être décrits en référence à la figure 4.

On suppose que le décodage de l'image IM1 est en cours dans le circuit pipeline PPL (étape 700) et que les deux pointeurs d'adresse PTA et PTB pointent à l'adresse @1.

Le paquet de bits situé à l'adresse @1, extrait de la zone mémoire ZCD, est lu par le détecteur SCD (étape 701).

Celui-ci détecte alors la pésence de l'identifiant de début d'image PSC2 de l'image IM2 (étape 702). Un signal représentatif de cette détection est alors envoyé au microprocesseur MP qui lit la suite des bits du paquet et notamment l'identifiant spécifique ET2 de l'image ainsi que le type IT2 de celle-ci (étape 703). L'image IM2 étant du type bidirectionnel, nécessitant donc un redécodage, le microprocesseur MP stocke dans le registre RG1 (étape 704) l'adresse @1 du paquet contenant l'identifiant PSC2 de début d'image de l'image IM2. Par ailleurs, la référence temporelle TR2 de l'image IM2 est stockée dans le registre REG3 (étape 705) et le type IT2 de cette image est stockée dans le registre REG4 (étape 706).

Le premier décodage de l'image IM2 débute alors dans le circuit pipeline PPL à l'aide des données utiles CDU2 issues du même paquet puisque le deuxième pointeur d'adresse PTB est également à l'adresse @1.

Le registre RG2 est ensuite incrémenté de façon à contenir l'adresse @2, ce qui a pour conséquence de faire pointer le pointeur d'adresse PTB sur cette nouvelle adresse @2 (étape 708). Le pointeur d'adresse PTA est également incrémenté par ailleurs et pointe également sur l'adresse @2.

Le premier décodage de l'image bidirectionnelle IM2 se poursuit avec le reste des données CDU2 (étape 709).

A la fin de ce premier décodage, le circuit VLD contenu dans les moyens PPL délivre un signal de fin de décodage ce qui a pour effet, sous l'action du signal de commande RDC émis par le microprocesseur MP (étape 710), de positionner le multiplexeur MUX2 sur sa première entrée forçant alors le contenu du registre RG2 à l'adresse @1 (étape 711).

En conséquence, le deuxième pointeur d'adresse PTB revient en arrière de façon à repointer sur l'adresse @1. Une difficulté réside ici dans le fait que dans un flot de données MPEG, les intervalles entre les différents identifiants de début d'image PSC des différentes images ne sont pas constants et dépendent du contenu des images. Par conséquent, cette difficulté, en combinaison avec la lecture par paquets de la zone mémoire ZCD, ne permet pas de connaître avec précision l'endroit où se situe le début de l'image IM2 dans le paquet.

L'invention résoud cette difficulté en utilisant, en combinaison avec le retour en arrière du pointeur PTB à l'adresse du paquet contenant l'identifiant de début d'image PSC2 de l'image à redécoder, la référence temporelle TR2 de l'image à redécoder.

Plus précisément, les moyens d'inhibition de décodage MHD vont alors tester séquentiellement les différents bits du paquet lus à l'adresse @1 et comparer ces informations avec l'identifiant spécifique (référence temporelle) TR2 de l'image IM2, stockée dans le registre RG3.

Et, tant que cette comparaison n'est pas positive, c'est-à-dire tant que l'on n'a pas à nouveau détecté la présence de cette référence temporelle TR2, les données fournies par le paquet ne sont pas prises en compte par le circuit pipeline PPL ce qui rend en fait ce dernier inactif (étape 713).

C'est seulement lorsque le résultat de comparaison est positif, c'est-à-dire lorsqu'on a à nouveau détecté la présence de la référence temporelle TR2 que les moyens MHD autorisent la prise en compte par le circuit PPL des données comprimées, permettant le deuxième décodage de l'image bidirectionnelle (étape 714). Au cours de ce deuxième décodage, le registre RG2 est à nouveau incrémenté de façon à déplacer le pointeur PTB à l'adresse @2 (étape 715) de façon à poursuivre le deuxième décodage de l'image IM2 (étape 716) jusqu'à sa fin.

Si l'on revient maintenant au fonctionnement général du décodeur DCD, les images "intra" et "prédites" sont, par un mécanisme classique de requêtes, envoyées vers la mémoire MMP à la sortie de l'additionneur tandis que chaque image bidirectionnelle B décodée est transmise macrobloc par macrobloc vers la mémoire tampon FF2 par l'intermédiaire du multiplexeur commandé par le signal STY émis par les moyens de contrôle LMC. Lorsqu'une image "intra" ou "prédite" stockée dans la mémoire MMP doit être affichée, le multiplexeur MUX est alors commandé sur sa deuxième entrée par le signal STY de façon à stocker les macroblocs de l'image, successivement extraits de la mémoire MMP, dans la mémoire tampon FF2.

Les images délivrées en sortie du multiplexeur MUX sont stockées séquentiellement dans la mémoire tampon FF2, macrobloc par macrobloc. Par contre, le contrôleur vidéo VDCTL nécessite une réception des pixels de l'image ligne par ligne. C'est la raison pour laquelle un convertisseur bloc/ligne BRC est intercalé entre la mémoire tampon FF2 et le contrôleur vidéo VDCTL.

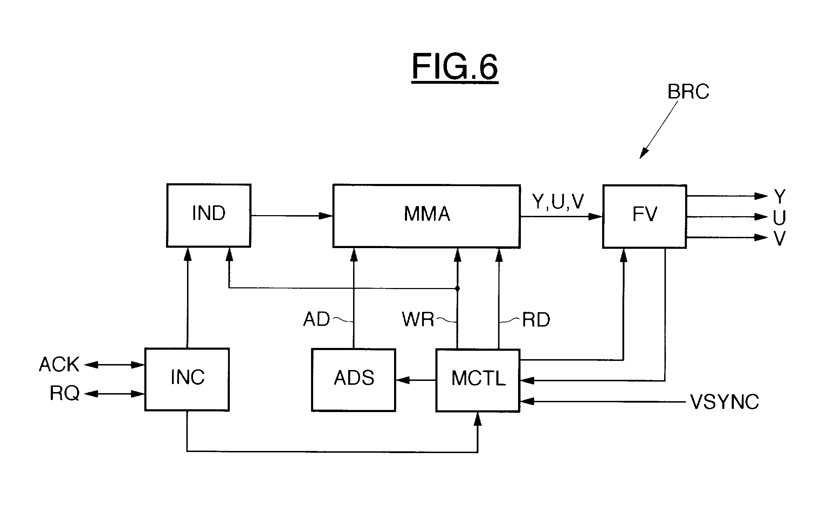

Comme illustré plus précisément sur la figure 6, ce convertisseur BRC comporte une interface d'entrée INB recevant les différents blocs de luminance et de chrominance de chaque macrobloc stocké dans la mémoire tampon FF2. Ces moyens INB sont contrôlés par un contrôleur d'entrée INC au moyen de signaux de requête RQ et d'acquittement ACK. Les données sont ensuite successivement écrites dans une mémoire auxiliaire MMA dont les adresses $A_{i,j}$ sont successivement déterminées par un séquenceur d'adresses ADS. Les différentes valeurs de luminance Y et de chrominance U et V sont extraites ligne par ligne de la mémoire MMA et délivrées à un circuit de filtrage FV qui, lorsqu'il est activé, permet d'effectuer un filtrage vertical sur ces lignes, c'est-à-dire par exemple une moyenne pondérée entre les différentes valeurs des pixels de ces lignes de façon à délivrer des valeurs filtrées de luminance et de chrominance. Le convertisseur BRC est contrôlé d'une façon générale par un contrôleur général MCTL recevant notamment un signal de synchronisation de trame VSYNC fourni par le contrôleur vidéo VDCTL. Ce signal VSYNC permet d'effectuer une sélection de parité. En effet, à chaque décodage, on n'affiche qu'une trame c'est-à-dire seulement les lignes paires ou seulement les lignes impaires. Ainsi, le convertisseur BRC trie parmi les lignes des blocs qu'il reçoit de la mémoire tampon FF2 celles dont la parité correspondant à celle de la trame à afficher. C'est la raison pour laquelle on parle d'un stockage dans la mémoire auxiliaire MMA, demi-macrobloc par demi-macrobloc (chaque demi-macrobloc correspondant à huit lignes). Ainsi, la capacité de ce convertisseur BRC est de huit lignes bien que les macroblocs correspondent à seize lignes. En d'autres termes, la mémoire MMA est capable de stocker au moins une rangée de demi-macroblocs (par exemple une rangée de 45 demi-macroblocs) correspondant à un nombre prédéterminé de lignes de la trame à afficher (en l'espèce huit).

La mémoire MMA est une mémoire dynamique que l'on peut considérer comme une FIFO de grande taille, à l'exception du fait que les accès ne sont pas consécutifs puisque cette mémoire est lue par lignes et écrite par blocs (demi-macroblocs). En fait, les moyens de contrôle MCTL et le séquenceur d'adresses sont programmés de façon à permettre l'écriture séquentielle des données d'un demi-macrobloc dès qu'une place suffisante dans la mémoire a été libérée par le processus d'affichage.

Plus précisément, le séquenceur d'adresses élabore l'adresse courante $A_{i,j}$ de la mémoire auxiliaire à laquelle est lue une donnée courante destinée à l'affichage avant d'être remplacée par une donnée courante d'un demi-macrobloc par la loi suivante :

$$A_{i+1,j} = (A_{i,j} + x_j) \text{ modulo } (MN-1)$$

$$x_{j+1} = N.x_j \text{ modulo } (MN-1).$$

Dans cette loi, $x_1=1$, M désigne le nombre de lignes de la mémoire auxiliaire, N le nombre de données par ligne, et n le nombre total de lignes de chaque trame. Par ailleurs, $0 < i < MN-1$ et $1 < j < n$.

Le fait d'utiliser cette mémoire auxiliaire du convertisseur BRC permet de limiter le nombre d'ouvertures de pages pour l'affichage des images "intra" et "prédites" stockées dans la mémoire principale MMP.

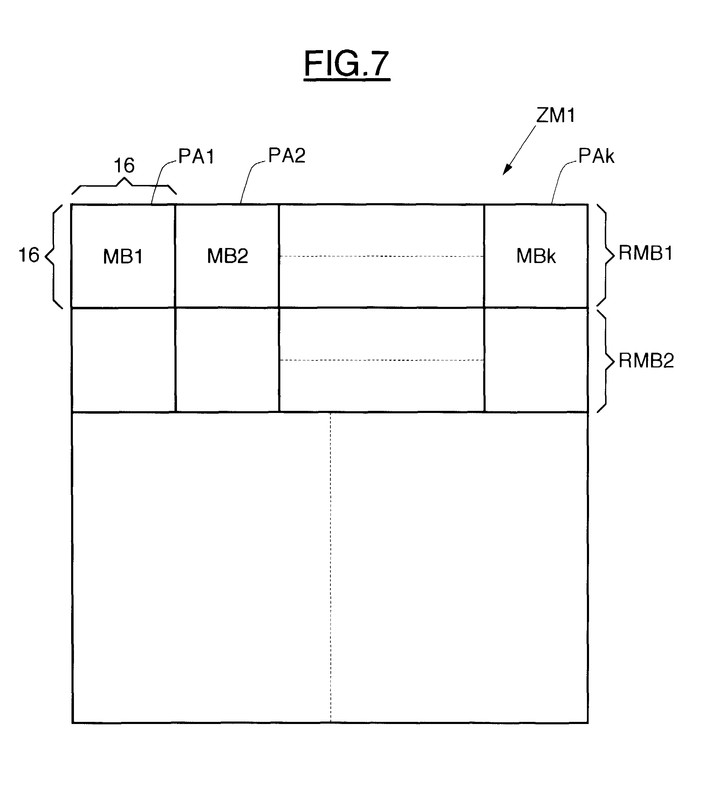

En effet, si l'on considère que la mémoire MMP est organisée en pages-mémoire (figure 7), chaque macrobloc MB de l'image stockée dans la zone ZM1 par exemple, est intégralement stocké dans une page PA de la zone de mémoire ZM1. A des fins de simplification, on n'a représenté qu'un seul macrobloc par page sur la figure 7, étant entendu qu'en pratique, chaque page-mémoire contient deux macroblocs. Sur la figure 7, la première rangée RMB1 de macrobloc MB1 - MBk correspondant aux seize premières lignes de l'image stockée dans la zone ZM1 s'étend donc sur les pages-mémoire PA1 - PAk. Le stockage dans la mémoire auxiliaire MMA de la rangée de demi-macroblocs correspondant aux huit lignes de mêmes parités nécessite donc k ouvertures de pages. L'affichage ensuite, ligne par ligne, des huit lignes stockées dans la mémoire MMA, ne nécessite donc plus d'ouverture de page. Le nombre total de cycles nécessaires de changement de page pour l'affichage complet de chaque trame d'une image stockée dans la mémoire MMP est donc particulièrement réduit par rapport à un cas de figure où l'on extrait les pixels de chaque trame ligne par ligne directement à partir de la mémoire MMP. En effet, dans un tel cas de figure, il faudrait effectuer k ouvertures de page par ligne de trame.

L'homme du métier aura donc remarqué que l'on obtient alors une réduction notable de la bande passante-mémoire utilisée. En outre, on utilise le même bloc de conversion BRC et, par conséquent, la même mémoire auxiliaire MMA pour afficher les images "intra" et "prédites" stockées dans la mémoire MMP, et pour afficher directement les images bidirectionnelles décodées au vol.

Enfin, puisque la mémoire auxiliaire MMA contient un nombre prédéterminé de lignes, en l'espèce huit, il est possible de connecter directement les moyens de filtrage FV en sortie de la mémoire MMA et d'effectuer ainsi sur commande un filtrage vertical d'au moins deux lignes contenues dans la mémoire MMA sans utiliser pour cela de lignes à retard (comme cela aura été le cas si l'on avait extrait directement de la mémoire MMP ligne par ligne les données de la trame).

### Revendications

**1.** Procédé de décodage d'une image incidente, caractérisé par le fait qu'on stocke dans une zone-mémoire (ZCD) d'une mémoire dynamique (MMP), un flot de données comprimées comportant des groupes successifs de données comprimées respectivement relatifs à des images incidentes successives (IM1, IM2) dont certaines (IM2) nécessitent deux décodages successifs, chaque groupe de données associé à une image comportant un identifiant de début d'image (PSC), suivi d'un en-tête (ET) contenant un identifiant spécifique (TR) de ladite image, suivi de données utiles (CDU), on lit le flot de données par paquets de bits localisés à des adresses consécutives (@1, @2) de ladite zone-mémoire, par le fait que pour chaque paquet extrait de ladite zone-mémoire, on détecte la présence ou l'absence d'un identifiant de début d'image (PSC), et dans le cas où un identifiant de début d'image détecté correspond à une image nécessitant deux décodages successifs, on mémorise l'adresse (@1) du paquet considéré ainsi que l'identifiant spécifique (TR2) de l'image, puis on effectue un premier décodage des données utiles de l'image à l'issue duquel on extrait à nouveau de la zone-mémoire le paquet situé à l'adresse mémorisée, et on procède au deuxième décodage de ladite image en décodant les données du paquet après détection dudit identifiant spécifique (TR2), les données du paquet précédant ledit identifiant spécifique n'étant pas prises en compte pour le décodage.

2. Procédé selon la revendication 1, caractérisé par le fait que ledit identifiant spécifique est l'identifiant temporel (TR) de l'image contenu dans l'en-tête.

3. Dispositif de décodage d'une image incidente, caractérisé par le fait qu'il comprend

une mémoire dynamique (MMP) comportant une zone-mémoire (ZCD) stockant un flot de données comprimées comportant des groupes successifs de données comprimées respectivement relatifs à des images incidentes successives dont certaines nécessitent deux décodages successifs, chaque groupe de données associé à une image comportant un identifiant de début d'image (PSC), suivi d'un en-tête (ET) contenant un identifiant spécifique de ladite image (TR), suivi de données utiles (CDU).

un premier pointeur d'adresse (PTA) et un deuxième pointeur d'adresse (PTB) permettant chacun de lire la zone-mémoire par paquet de bits,

un détecteur d'identifiant de début d'image (SCD) apte à détecter dans chaque paquet de bits extrait à l'adresse pointée par le premier pointeur d'adresse, la présence ou l'absence d'un identifiant de début d'image,

des premiers moyens de stockage (RG1) aptes à stocker en présence d'un premier signal de commande représentatif de la présence d'une image courante nécessitant deux décodages successifs, l'adresse spécifique du paquet (@1) contenant l'identifiant de début d'image de ladite image courante,

des deuxièmes moyens de stockage (RG2) aptes à stocker en présence du premier signal de commande, l'identifiant spécifique de ladite image courante (TR2),

des moyens de traitement (MP) reliés au détecteur d'identifiant de début d'image, apte à délivrer ledit premier signal de commande,

un circuit de décodage (PPL) apte à décoder les bits de chaque paquet pointé par le deuxième pointeur d'adresse,

des moyens de gestion de pointeur (MUX2, RG1, RG2) aptes, en réponse à un deuxième signal de commande (RDC) émis par le circuit de décodage et représentatif de la fin d'un premier décodage d'une image, à déplacer le deuxième pointeur d'adresse (PTB) à l'adresse spécifique stockée dans les premiers moyens de stockage, et

des moyens d'inhibition de décodage (MHD) aptes à comparer le contenu des deuxièmes moyens de stockage avec les informations contenues dans le paquet situé à ladite adresse spécifique et à inhiber le circuit de décodage tant que l'identifiant spécifique de ladite image n'est pas de nouveau détecté.

4. Dispositif selon la revendication 3, caractérisé par le fait que ledit identifiant spécifique est l'identifiant temporel (TR) de l'image contenu dans l'en-tête.

# FIG.1

EP 0 969 672 A1

FIG.2

## FIG.3

EP 0 969 672 A1

FIG.4

# FIG.5

## FIG.6

BRC

IND → MMA — Y,U,V → FV → Y, U, V

AD, WR, RD

ACK ↔ INC
RQ ↔ INC

ADS ← MCTL ← VSYNC

EP 0 969 672 A1

# FIG.7

ZM1

16  PA1  PA2  PAk

16 {

| MB1 | MB2 | - - - - - | MBk | } RMB1 |

} RMB2

**Office européen des brevets**

**RAPPORT DE RECHERCHE EUROPEENNE**

Numéro de la demande

EP 99 40 1459

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO 97 11562 A (FRENCKEN PETER HUBERTUS ;PHILIPS ELECTRONICS NV (NL); PHILIPS NORD) 27 mars 1997 (1997-03-27) * page 11, ligne 8 - page 12, ligne 22; figures 14,15 * --- | 1-4 | H04N7/50 |
| A | EP 0 732 857 A (SGS THOMSON MICROELECTRONICS) 18 septembre 1996 (1996-09-18) * le document en entier * --- | 1-4 | |
| A | EP 0 725 399 A (SONY CORP) 7 août 1996 (1996-08-07) * colonne 14, ligne 49 - colonne 16, ligne 11; figure 11 * ----- | 1-4 | |

**DOMAINES TECHNIQUES RECHERCHES (Int.Cl.6)**

H04N

Le présent rapport a été établi pour toutes les revendications

| Lieu de la recherche | Date d'achèvement de la recherche | Examinateur |
|---|---|---|
| BERLIN | 23 septembre 1999 | Raeymaekers, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1459

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-09-1999

| Document brevet cité au rapport de recherche | | Date de publication | Membre(s) de la famille de brevet(s) | | Date de publication |
|---|---|---|---|---|---|
| WO 9711562 | A | 27-03-1997 | EP | 0792557 A | 03-09-1997 |
| | | | JP | 10509576 T | 14-09-1998 |
| | | | US | 5936670 A | 10-08-1999 |
| EP 0732857 | A | 18-09-1996 | FR | 2731864 A | 20-09-1996 |
| | | | JP | 8294115 A | 05-11-1996 |
| EP 0725399 | A | 07-08-1996 | JP | 8214264 A | 20-08-1996 |
| | | | AU | 699801 B | 17-12-1998 |
| | | | AU | 4226596 A | 08-08-1996 |
| | | | BR | 9600279 A | 23-12-1997 |
| | | | CA | 2167985 A | 01-08-1996 |
| | | | CN | 1136260 A | 20-11-1996 |
| | | | US | 5768466 A | 16-06-1998 |
| | | | US | 5802242 A | 01-09-1998 |

EPO FORM P0460

Pour tout renseignement concernant cette annexe : voir Journal Officiel de l'Office européen des brevets, No.12/82